**Europäisches Patentamt**

**European Patent Office**

**Office européen des brevets**

(19)

(11) Numéro de publication: **0 163 558**
**B1**

(12) # FASCICULE DE BREVET EUROPEEN

(45) Date de publication du fascicule du brevet:
**07.01.88**

(51) Int. Cl.⁴: **B 23 P 19/04**

(21) Numéro de dépôt: **85400741.6**

(22) Date de dépôt: **16.04.85**

(54) **Dispositif pour le montage des soupapes dans la culasse d'un moteur à combustion interne.**

(30) Priorité: **10.05.84 FR 8407532**

(43) Date de publication de la demande:
**04.12.85 Bulletin 85/49**

(45) Mention de la délivrance du brevet:
**07.01.88 Bulletin 88/1**

(84) Etats contractants désignés:
**DE GB IT SE**

(56) Documents cités:
**FR - A - 2 294 016**
**FR - A - 2 445 199**
**US - A - 3 949 295**
**US - A - 4 078 671**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Kerlidou, Michel, 19bis, rue de la Source, F-78410 La Falaise Aubergenville (FR)**

(74) Mandataire: **Boivin, Claude, 9, rue Edouard-Charton, F-78000 Versailles (FR)**

## Description

La présente invention concerne un dispositif pour le montage de soupapes dans la culasse d'un moteur à combustion interne, qui peut être monté sur une chaîne trasnfert de montage de moteurs dont tous les postes sont automatisés. Un dispositif de ce genre coopère, dans ce cas, avec un robot manipulateur propre à introduire automatiquement et simultanément une pluralité de soupapes dans une série de guides prévus dans la culasse et disposés verticalement.

Les queues de soupapes présentent un jeu de quelques centièmes de millimètre par rapport à leur guide. Le guide est muni à son extrémité d'un chanfrein de quelques dixièmes de millimètre. Si l'on veut assurer l'opération d'introduction à l'aide d'un robot, il faut, pour que le centrage soit possible, que le robot présente chaque queue de soupape à l'intérieur du chanfrein du guide; cela représente pour le robot une précision de coordonnées difficile à réaliser.

Par ailleurs, si le robot présente une queue de soupape qui est décalée par rapport à son guide, il peut en résulter pendant son introduction dans la culasse un flambage de la queue avec une marque sur la culasse.

Le document US-A-4 078 671 décrit un appareil de préhension pour robot industriel qui est fixé sur un support et comprend une première partie fixée au support, une seconde partie de préhension reliée par des moyens élastiques à la première partie, des moyens pour centrer les deux parties de l'appareil l'une par rapport à l'autre, et des moyens pour mettre en dépression les première et seconde partie.

La présente invention a pour objet un dispositif pour le montage des soupapes dans la culasse d'un moteur à combustion interne à l'aide d'un robot manipulateur, qui comprende un appareil de préhension et permet d'assurer l'extraction de leur support d'une série de soupapes et leur introduction automatique et simultanée dans leurs guides respectifs de la culasse disposés verticalement, même quand l'erreur de cordonnées du robot est supérieure au rayon de la queue de soupape.

Ce dispositif est caractérisé en ce qu'il comporte des moyens pour engendrer une dépression dans les guides de soupape pendant l'introduction des soupapes et un ensemble d'appareils de préhension qui sont fixés à un même support et affectés chacun à l'une des soupapes et en ce que chaque appareil de préhension comprend des moyens pour assurer la mise en action des moyens de centrage en l'absence de préhension et pour maintenir la dépression dans la seconde partie quand les moyens de centrage sont hors d'action.

Pour utiliser ce dispositif, on assure tout d'abord le centrage des deux parties de chaque appareil de préhension et on prélève une série de soupapes. On amène le dispositif à l'aplomb de la culasse et on approche verticalement les soupapes de leurs guides. Puis on met les guides en dépression et on met hors d'action les moyens de centrage. Chacune des soupapes se centre alors dans son guide sous l'effet de la dépression; il ne reste plus qu'à libérer de l'appareil de préhension les soupapes qui s'emmanchent dans leur quiges respectifs.

Dans un mode de réalisation de l'invention, la partie de préhension de l'appareil de préhension est reliée à la première partie de cet appareil par un soufflet élastique pouvant être relié à une source de vide, et présente à sa partie supérieure une portée tronconique pouvant s'appliquer sur une portée tronconique prévue à la partie inférieure de ladite première partie.

Pour centrer les deux parties de l'appareil de préhension l'une par rapport à l'autre, il suffit de faire le vide dans le soufflet. La partie de préhension remonte sous l'effet de la dépression engendrée dans ce soufflet et les deux portées tronconiques s'appliquent l'une sur l'autre en assurant le centrage. Lorsqu'ensuite on coupe l'aspiration, les deux portées tronconiques s'écartent, ce qui permet à la soupape de s'orienter convenablement et de s'engager dans son guide.

La partie de préhension peut comporter un perçage central qui communique avec le soufflet. La préhension de la soupape est ainsi automatiquement assurée lorsqu'on applique cette partie de préhension sur la soupape et qu'on met le soufflet en communication avec la source de vide.

Pour permettre à l'élément de préhension de continuer à maintenir la soupape lorsque l'aspiration dans le soufflet est coupée, de façon que la soupape puisse s'orienter, le perçage central de la partie de préhension peut comporter, en un endroit écarté de son extrémité inférieure, un clapet soumis à l'action d'un ressort et commandé par la dépression dans le soufflet. Ce clapet s'ouvre lorsque le clapet est mis en dépression, ce qui permet à la dépression d'agir sur la tête de soupape pour la maintenir. Lorsque l'aspiration dans le soufflet est coupée, le clapet se ferme sous l'action de son ressort. Mais la partie du perçage qui se trouve en aval du clapet reste en dépression et la soupape reste maintenue.

Le clapet peut comporter un gicleur mettant en communication la partie du perçage qui se trouve en aval de ce clapet avec la partie qui se trouve en amont de celui-ci. Quand le clapet est fermé, la dépression dans la partie du perçage qui se trouve en aval de ce clapet diminue progressivement de sorte que la soupape est automatiquement libérée au bout d'un temps déterminé, ce qui lui permet de s'emmancher dans son guide, après son centrage.

On a décrit ci-après, à titre d'exemple non limitatif, un mode de réalisation du dispositif selon l'invention, avec référence aux dessins annexés dans lesquels:

la figure 1 est une vue en coupe axiale d'un appareil de préhension;

la figure 2 est une coupe montrant une queue de soupape dans son guide et des moyens pour engendrer une dépression dans ce guide;

les figures 3 à 8 sont des vues en élévation de l'appareil de préhension, à diverses étapes de la mise en place de la soupape.

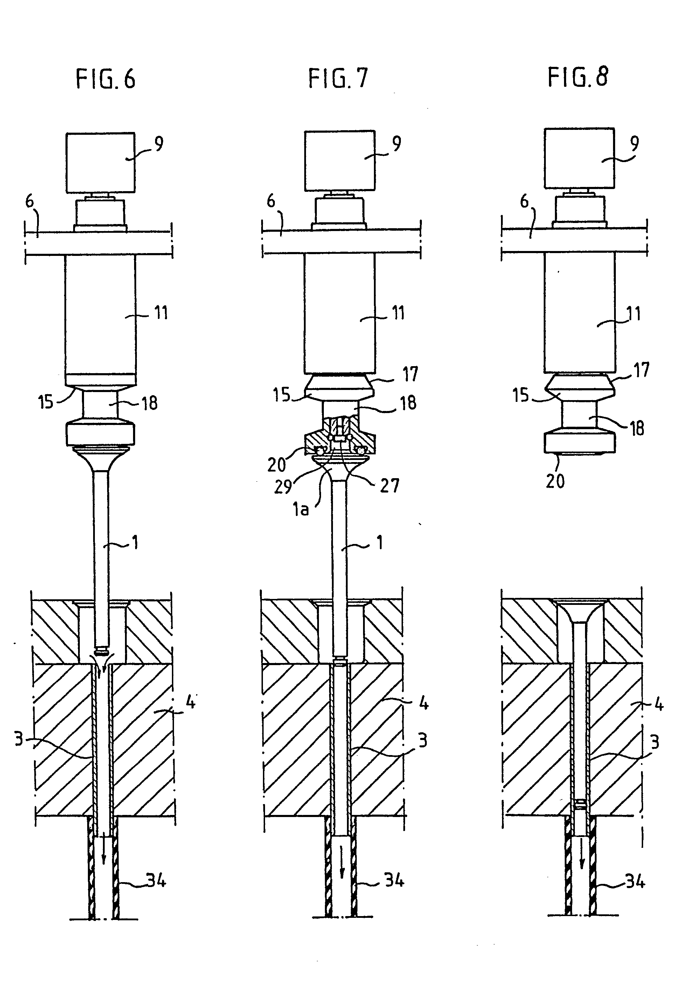

Tel qu'il est représenté au dessin, le dispositif de montage selon l'invention est destiné à extraire des soupapes 1 disposées dans un support 2 en forme de ratelier et à les introduire simultanément dans des guides 3 d'une culasse 4 (voir figure 6).

Il comprend, pour chaque soupape à introduire, un appareil de préhension désigné au dessin d'une façon générale par la référence 5, l'ensemble des appareils de préhension étant monté sur un même support 6.

Chacun des appareils de préhension comprend un porte-venturi 7 qui est fixé au support 6 par un écrou 8 et porte un venturi 9. Celui-ci est relié à une source d'air sous pression schématisée par la flèche F; à son col débouche un conduit axial 10 du porte-venturi 7, une dépression étant ainsi engendrée dans ce conduit lorsque le venturi est alimenté en air comprimé.

Un centreur 11 présentant la forme d'un tube disposé verticalement, et fermé à sa partie supérieure, est disposé coaxialement au porte-venturi 7. Son fond est percé d'un trou 12 pour le passage d'un porte-venturi et il est maintenu sous le support 6 par une collerette 13 de ce porte-venturi. La partie inférieure est taillée suivant un tronc de cône 14 évasé vers l'extérieur.

Un corps centré 15 est suspendu au porte-venturi 7 par un soufflet 16 dans lequel débouche le conduit 10, la fixation de chacune des extrémités de ce soufflet respectivement au corps centré et au porte-venturi étant réalisée de manière étanche. La face supérieure 17 de ce corps centré a la forme d'un tronc de cône supplémentaire du tronc de cône 14.

Dans le corps centré 15 est vissé un élément de préhension 18 dont la face inférieure a approximativement la forme et les dimensions de la tête 1a de la soupape 1. Cette face inférieure présente une gorge 19 dans laquelle est logé un joint torique 20.

L'élément de préhension 18 comporte un alésage axial 21 qui communique avec l'intérieur du soufflet 16 par un perçage 22 du corps centré 15. Dans ces conditions, lorsque le venturi 9 est alimenté et qu'une dépression est engendrée dans le conduit 10, cette dépression, qui est transmise par le soufflet, s'exerce également à la partie inférieure de l'élément de préhension 18 et assure le maintien de la soupape 1 sur la tête de 1a de laquelle a été appliqué le joint 20.

Un clapet 23 est monté coulissant dans l'alésage 21 de l'élément de préhension 18. Un ressort 24 qui prend appui sur le corps centré 15, tend à maintenir le clapet en appui contre un joint annulaire 25 prévu à la surface de l'alésage 21, à une certaine distance de l'extrémité inférieure de celui-ci. Ce clapet 23 comporte un alésage axial 26 dans lequel est vissé un gicleur 27. Il présente en outre à sa périphérie des rainures longitudinales 28 qui permettent à la dépression de s'exercer à la partie inférieure de l'élément de préhension, quand il n'est pas appliqué sur son siège 25. La partie inférieure de l'alésage 21, sous le gicleur 27, forme une chambre 29.

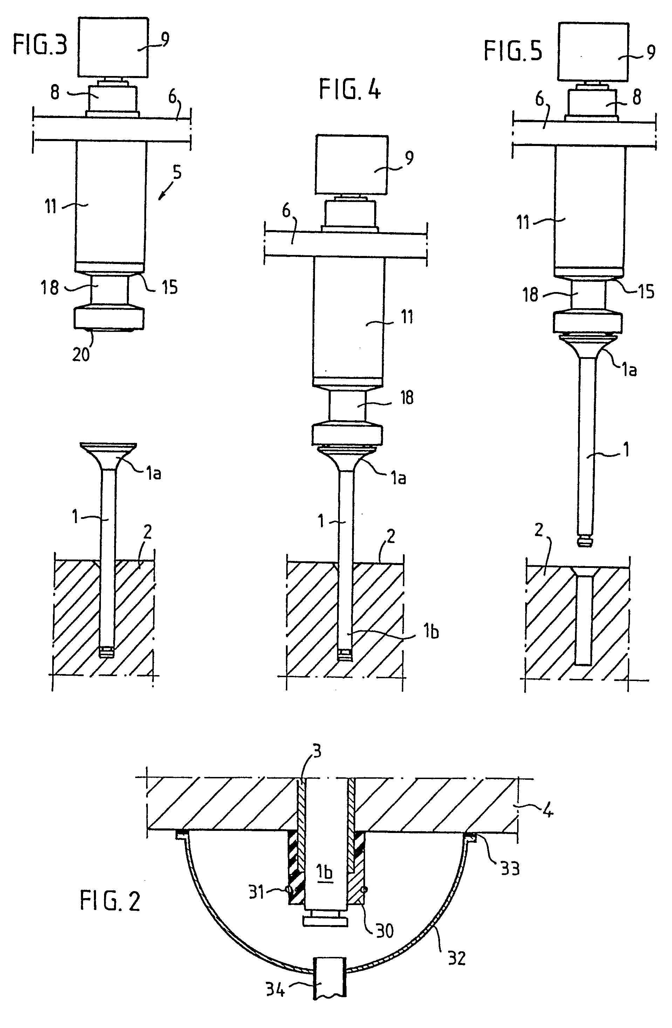

Comme on le voit à la figure 2, chacun des guides 3 de la culasse 4 fait saillie à l'extérieur de cette culasse et un cabochon 30 est emmanché sur l'extrémité en saillie du guide. La longueur du cabochon est supérieure à celle de cette extrémité en saillie et le cabochon porte un jonc de serrage 31 dans sa partie extérieure à ladite extrémité en saillie. Dans ces conditions, quand la soupape 1 a été mise en place dans la culasse et que sa queue 1b traverse le cabochon 30, elle est prisonnière de la culasse.

Autour du cabochon 30 peut s'appliquer le carter 32, commandé par un vérin non représenté, muni d'un joint d'étanchéité 33 et relié à une source d'aspiration par un tuyau 34.

Le fonctionnement du dispositif qui vient d'être décrit est le suivant:

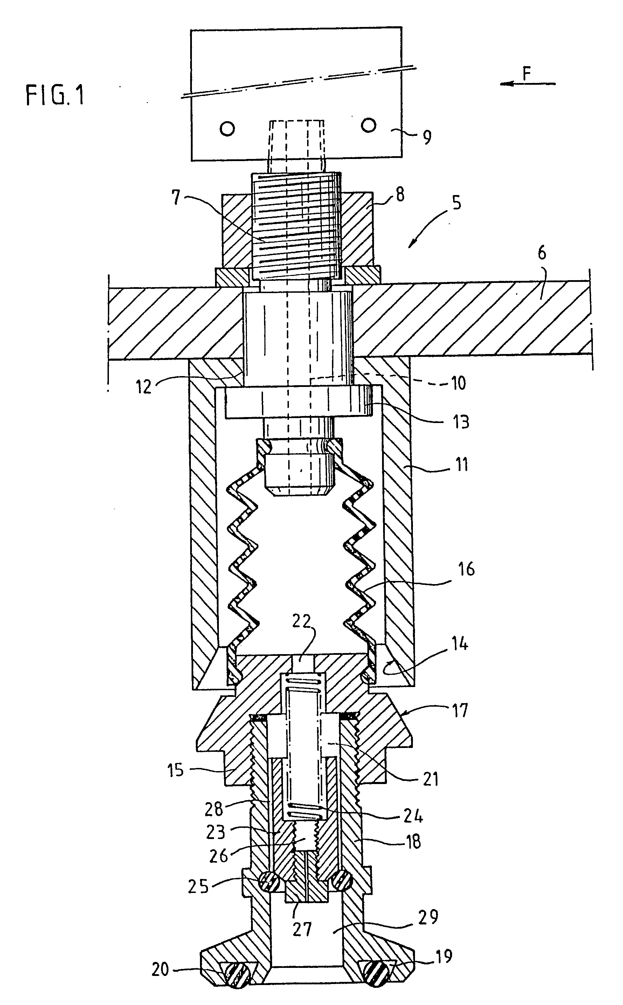

Au repos, chacun des appareils de préhension se trouve dans la position de la figure 1, dans laquelle le clapet 23 est appliqué sur son siège 25, les deux surfaces tronconiques 14 et 17 étant écartées l'une de l'autre.

Le dispositif de montage est alors amené au-dessus du ratelier 2 de façon que chacun des appareils 5 se trouve à l'aplomb d'une soupape 1. Les venturi 9 sont alors mis en fonctionnement (figure 3). Sous l'effet de la dépression, le soufflet 16 se contracte et la surface 17 du corps 15 s'applique sur la surface 14 du centreur 11, ce qui assure le centrage de ce corps 15. En même temps, le clapet 23 remonte en comprimant le ressort 24, les rainures 28 ayant des dimensions suffisamment faibles pour que la perte de charge créée surmonte l'action du ressort 24.

Puis l'appareil de préhension 5 est amené par le robot à proximité de la tête 1a de la soupape qui est ainsi saisie par aspiration (figure 4).

La soupape est extraite de son support 2 (figure 5) et portée à proximité du guide 3, sensiblement dans son axe, le carter 32 ayant été appliqué sur la culasse autour du cabochon 30 et le tuyau 34 ayant été préalablement relié à la source de vide (figure 6). Puis on coupe l'alimentation en air du venturi 9. Le corps centré 15 se décolle du centreur 11, ce qui donne une liberté de mouvement à la soupape suspendue 1, le soufflet élastique 16 permettant à la fois l'orientation de cette soupape et un certain déplacement axial de celle-ci. En même temps, le ressort 24 applique le ressort 23 sur son siège 25, ce qui a pour effet de maintenir la dépression dans la chambre 29 (figure 7). La soupape s'oriente par rapport au guide et se met dans une position propre à son introduction dans celui-ci.

Puis la dépression dans la chambre 29 chutant lentement, grâce au gliceur 27, la soupape se sépare de l'élément de préhension 18 et est aspirée par la guide 3 (figure 8). En fin de course, elle est maintenue prisonnière par le cabochon 30.

**Revendications**

1. Dispositif pour le montage des soupapes (1) dans la culasse (4) d'un moteur à combustion interne à l'aide d'un robot manipulateur qui permet d'assurer l'extraction de leur support (2) d'une série de soupapes (1) et leur introduction automatique et simultanée dans leurs guides (3) respectifs de la culasse (4) disposée verticalement, où un appareil de préhension (5) est fixé sur un support (6) et comprend une première partie (11) fixée au support (6), une seconde partie de préhension (18) reliée par des moyens élastiques (16) à la première partie (11), des moyens (14-17) pour centrer les deux parties (11-18) de l'appareil l'une par rapport à l'autre, et des moyens (9) pour mettre en dépression les première et seconde parties, caractérisé en ce qu'il comporte des moyens (32-34) pour engendrer une dépression dans les guides de soupape (3) pendant l'introduction des soupapes (1) et un ensemble d'appareils de préhension (5) qui sont fixés à un même support (6) et affectés chacun à l'une des soupapes et en ce que chaque appareil de préhension (5) comprend des moyens (23-24-25) pour assurer la mise en action des moyens de centrage (14-17) en l'absence de préhension et pour maintenir la dépression dans la seconde partie (18) quand les moyens de centrage sont hors d'action.

2. Dispositif selon la revendication 1, caractérisé en ce que le partie de préhension (18) de l'appareil de préhension (5) est reliée à la première partie (11) de cet appareil par un soufflet élastique (16) pouvant être relié à une source de vide (9), et présente à sa partie supérieure une portée tronconique (17) pouvant s'appliquer sur une portée tronconique (14) prévue à la partie inférieure de ladite première partie.

3. Dispositif selon la revendication 2, caractérisé en ce que la partie de préhension (18) comporte un perçage central (21) qui communique avec le soufflet (16).

4. Dispositif selon la revendication 3, caractérisé en ce que le perçage central (21) de la partie de préhension (18) comporte, en un endroit écarté de son extrémité inférieure, un clapet (23) soumis à l'action d'un ressort (24) et commandé par la dépression dans le soufflet (16).

5. Dispositif selon la revendication 4, caractérisé en ce que le clapet (23) présente à sa périphérie des rainures longitudinales (28).

6. Dispositif selon la revendication 4 ou 5, caractérisé en ce que le clapet (23) comporte un gicleur (27) mettant en communication la partie (29) du perçage (21) qui se trouve en aval de ce clapet avec la partie qui se trouve en amont de celui-ci.

**Claims**

1. Device for assembling valves (1) inside the cylinder head (4) of an internal combustion engine by means of a manipulator robot which allows for the extraction from their support (2) of a series of valves (1) and their automatic and simultaneous introduction into their respective guides (3) of the cylinder head (4) disposed vertically where a gripping device (5) is secured to a support (6) and includes a first part (11) fixed to the support (6), a second gripping part (18) connected by elastic means (16) to the first part (11), means (14-17) for centering both parts (11-18) of the device in relation to each other, and means (9) to depress the first and second parts, characterized in that it includes means (32-34) for generating a partial vacuum inside the valve guides (3) when the valves (1) are introduced and a set of gripping devices (5) which are fixed on a given support (6) and each allocated to one of the valves and in that each gripping device (5) includes means (23-24-25) for activating the centering means (14-17) in the absence of gripping and so as to maintain the partial vacuum in the second part (18) when the centering means are out of action.

2. Device according to claim 1, characterized in that the gripping part (18) of the gripping device (5) is connected to the first part (11) of this device via a pair of elastic bellows (16) which can be connected to a vacuum source (9) and, at its upper part, has a truncated boss (17) capable of being applied on a truncated boss (14) provided in the lower part of the said first part.

3. Device according to claim 2, characterized in that the gripping part (18) includes a central boring (21) which communicates with the bellows (16).

4. Device according to claim 3, characterized in that the central boring (21) of the gripping part (18) includes, at a place separated from its lower extremity, a stop valve (23) subjected to the action of a spring (24) and controlled by the partial vacuum inside the bellows (16).

5. Device according to claim 4, characterized in that the stop valve (23) possesses on its periphery longitudinal grooves (28).

6. Device according to claim 4 or 5, characterized in that the stop valve (23) includes a nozzle (27) placing in communication that part (29) of the boring (21) found downstream of this stop valve with the part occurring upstream of the latter.

**Patentansprüches**

1. Vorrichtung zum Montieren von Ventilen im Zylinderkopf eines Verbrennungsmotors mittels eines Roboter-Manipulators, der das Ausziehen einer Serie von Ventilen (1) aus ihrer Halterung (2) und ihr automatisches und gleichzeitiges Einstecken in ihre jeweiligen, in vertikaler Richtung im Zylinderkopf (4) angeordneten Führungen (3) ermöglicht und an dem an einer Halterung (6) ein Greifwerkzeug (5) befestigt ist, das ein erstes, an der Halterung (6) befestigtes Teil (11), ein zweites mit dem ersten Teil (11) über elastische Mittel (16) verbundenes Greifteil (18), Mittel (14-17) zum gegenseitigen Zentrieren der beiden Teile (11-18) des Werkzeuges und Mittel (9) um das erste und das zweite Teil unter Unterdruck zu setzen, aufweist, dadurch gekennzeichnet, dass sie Mittel (32-34) zum Erzeugen eines Unterdrucks in den Ventilführungen (3) während des Einsteckens der Ventile (1) aufweist, sowie eine Gruppe von an der gleichen Halterung (6) befestigten Greifwerkzeugen (5), von denen jedes für eines der Ventile verwendet wird und dass jedes Greifwerkzeug (5) Mittel (23-24-25) aufweist zur Inbetriebnahme der Mittel (14-17) zum Zentrieren im Zustand des Nichtgreifens und zum Aufrecherhalten des Unterdruckes im zweiten Teil (18), während die Mittel zum Zentrieren ausser Betrieb sind.

2. Vorrichtung nach Anspruch 1, dadurch gekennzeichnet, dass das Greifteil (18) des Greifwerkzeuges (5) mit dem ersten Teil (11) dieses Werkzeugs über einen an eine Vakuumquelle (9) anschliessbaren elastischen Faltenbalg (16) verbunden ist und an seinem Oberteil eine kegelstumpfförmige Lagerfläche (17) aufweist, welche sich an eine am Unterteil besagten ersten Teils angeordnete kegelstumpfförmige Lagerfläche (14) anlegen kann.

3. Vorrichtung nach Anspruch 2, dadurch gekennzeichnet, dass das Greifteil (18) eine zentrale Bohrung (21) aufweist, die mit dem Faltenbalg (16) verbunden ist.

4. Vorrichtung nach Anspruch 3, dadurch gekennzeichnet, dass die zentrale Bohrung (21) des Greifteils (18) an einer im Abstand von seinem unteren Ende angeordneten Stelle eine Ventilklappe (23) aufweist, die unter der Einwirkung einer Feder (24) steht und durch den Unterdruck im Faltenbalg (16) gesteuert wird.

5. Vorrichtung nach Anspruch 4, dadurch gekennzeichnet, dass die Ventilklappe (23) an ihrer Peripherie in Längsrichtung verlaufende Nuten (28) aufweist.

6. Vorrichtung nach Anspruch 4 oder 5, dadurch gekennzeichnet, dass die Ventilklappe (23) eine Düse (27) aufweist, die den Teil (29) der Bohrung (21), der sich stromabwärts dieser Ventilklappe befindet, mit dem Teil verbindet, der sich stromaufwärts von ihr befindet.

FIG.1

FIG.3

FIG. 4

FIG.5

FIG. 2

## FIG.6

## FIG.7

## FIG.8